# EUROPÄISCHE PATENTANMELDUNG

(11) **EP 4 715 233 A1**
(43) Veröffentlichungstag der Anmeldung: **25.03.2026**
(21) Anmeldenummer: 24201257.3
(22) Anmeldetag: 19.09.2024
(51) Int. Cl.: F16C 33/14, F16C 17/02

(54) **GLEITLAGERANORDNUNG**

(71) Anmelder: Flender GmbH, 46395 Bocholt (DE)
(72) Erfinder: DINTER, Ralf Martin, 46395 Bocholt (DE)
(74) Vertreter: Michalski Hüttermann & Partner Patentanwälte mbB

(57) **Zusammenfassung**

Es ist eine Gleitlageranordnung (10) vorgesehene mit einem aus einem schweißbaren Material hergestellten Werkstück, wobei das Werkstück zumindest in einem Teilbereich einen zylindrischen Bolzen (12) und/oder eine hohlzylindrische Nabe aufweist, und einer auf den Bolzen (12) aufgesteckten oder in die Nabe eingesteckten Gleitlagerhülse (20), wobei die Gleitlagerhülse (20) eine von dem Werkstück wegweisende Gleitlagerfläche (24) und einen an dem Werkstück anliegenden schweißbaren Haltekörper (22) aufweist, wobei der Haltekörper (22) mit dem Werkstück verschweißt ist. Durch das Verschweißen der Gleitlagerhülse (20) mit dem Werkstück kann kostengünstig ein mechanisch hochbelastbares Gleitlager bereitgestellt werden, so dass eine kostengünstige und hochbelastbare Gleitlageranordnung (10), insbesondere für den Einsatz in industriellen Windkraftanlagen, ermöglicht ist.

## Beschreibung

Die Erfindung betrifft eine Gleitlageranordnung, mit dessen Hilfe ein Hohlkörper an einem Bolzen gleitgelagert werden kann, sowie eine Planetenradlagerung mit einer derartigen Gleitlageranordnung und ein Windgetriebe mit einer derartigen Gleitlageranordnung. Die Erfindung betrifft ferner eine Verwendung einer derartigen Planetenradlagerung sowie ein Datenagglomerat zur additiven Fertigung und/oder Simulation einer derartigen Gleitlageranordnung oder Planetenradlagerung.

Aus US 2015/0133260 A1 ist eine Gleitlageranordnung für die Lagerung eines Planetenrads an einem Planetenradbolzen eines Planetengetriebes für eine Windkraftanlage bekannt, bei der L-förmige Gleitlagerhülsen auf dem Planetenradbolzen aufgesteckt sind, die an dem zum Planetenrad weisenden Flächen mit einem Gleitlagermaterial beschichtet sind, um für das Planetenrad ein Radialgleitlager und zwei Axialgleitlager auszubilden. Die Gleitlagerhülsen sind zwischen zwei Wangen des Planetenträgers verpresst, um die Gleitlagerhülsen mit dem von einer der Wangen ausgebildeten Planetenradbolzen zu fixieren.

Aus WO 2019/178630 A1 ist es bekannt einen Gleitlagerwerkstoff durch Auftragsschweißen direkt auf einer Außenmantelfläche einer Planetenradachse eines Planetengetriebes für eine Windkraftanlage aufzubringen.

Üblicherweise werden in Windgetrieben für Windkraftanlagen Planetenräder über robuste Wälzlager an einem feststehend mit dem Planetenradträger befestigten Planetenradbolzen gelagert. Der Versuch dieses Wälzlager durch ein Gleitlager zu ersetzen ist mit vielen Schwierigkeiten bezüglich Schmierung, Bauraumanforderungen, Verschleiß, Tragfähigkeit, Temperaturbeständigkeit, statischer und dynamischer Belastbarkeit, Anfahrverhalten, Abschälfestigkeit etc. bezüglich der Gleitlagerung verbunden, da bei einer Windkraftanlage das Windgetriebe nur bei geeigneten Wetterbedingungen in Bewegung versetzt wird, aber sofort mit Beginn der Bewegung bereits eine extrem hohe Leistung übertragbar sein muss und den hierbei auftretenden Belastungen standhalten muss. Beispielsweise muss das Windgetriebe für Onshore-Windkraftanlagen für eine Nennleistung von 2 bis 5 MW und bei Offshore-Windkraftanlagen für eine Nennleistung von bis zu 15 MW ausgelegt sein, was zu extremen Anforderungen für die Lagerung des Planetenrads an dem Planetenradbolzen führt.

Es ist die Aufgabe der Erfindung Maßnahmen aufzuzeigen, die eine kostengünstige und hochbelastbare Gleitlageranordnung, insbesondere für den Einsatz in industriellen Windkraftanlagen, ermöglichen.

Die Lösung der Aufgabe erfolgt durch eine Gleitlageranordnung mit den Merkmalen des Anspruchs 1, eine Planetenradlagerung mit den Merkmalen des Anspruchs 11, eine Verwendung mit den Merkmalen des Anspruchs 13, ein Windgetriebe mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird.

Ein Aspekt der Erfindung betrifft eine Gleitlageranordnung mit einem aus einem schweißbaren Material hergestellten Werkstück, wobei das Werkstück zumindest in einem Teilbereich einen zylindrischen Bolzen und/oder eine hohlzylindrische Nabe aufweist, und einer auf den Bolzen aufgesteckten oder in die Nabe eingesteckten Gleitlagerhülse, wobei die Gleitlagerhülse eine von dem Werkstück wegweisende Gleitlagerfläche und einen an dem Werkstück anliegenden schweißbaren Haltekörper aufweist, wobei der Haltekörper mit dem Werkstück verschweißt ist.

Es wurde erkannt, dass eine mechanisch verklemmte oder verpresste Gleitlagerhülse eines Gleitlagers in einem Windgetriebe beispielsweise aufgrund von im laufenden Betrieb auftretenden wetterbedingten Temperaturunterschieden und Wärmedehnungseffekten unter den auftretenden Belastungen seine reibschlüssige Fixierung überwinden und mitdrehen kann, wenn sie nicht zusätzlich durch eine separate mechanische Fixierung gesichert wird. Dadurch würde ein starker Verschleiß der Gleitlagerhülse an den dann auftretenden Schleifstellen auftreten und/oder eine Schmierstoffzufuhr von dem Werkstück durch die Gleitlagerhülse hindurch an die Gleitlagerfläche blockiert werden. Zudem würde die mitdrehende Gleitlagerhülse zu einem erheblichen Verschleiß an dem Planetenradbolzen führen und die Gleitlagerkinematik mit dem zu lagernden Körper beeinträchtigen. Dies kann insbesondere ein Schmierkonzept zur Schmierung eines Planetenrads an der Gleitlagerhülse beeinträchtigen oder sogar bis zu einer möglichen Zerstörung blockieren. Ebenso wurde erkannt, dass eine Beschichtung des Planetenradbolzens durch Auftragsschweißen zu einer erheblichen thermischen Belastung des Planetenradbolzens und der Gleitlagerschicht führen kann. Während des Auftragsschweißens können sich Gefügeveränderungen in dem Planetenradbolzen und/oder in der Gleitlagerschicht ergeben, welche die Belastbarkeit, Tragfähigkeit und Abschälfestigkeit des Gleitlagers beeinträchtigen können. Durch das Auftragsschweißen können leicht Gefügeveränderungen erzeugt werden, die von außen nicht erkennbar sind und die Qualität der Gleitlagerung bezüglich ihrer mechanischen Langzeitfestigkeit beeinträchtigen können. Um nicht den geforderten Qualitätsanforderungen genügende auftragsgeschweißte Gleitlageranordnungen zu erkennen und als Ausschuss aussortieren zu können, wären kostenintensive berührungslose Messverfahren erforderlich.

Stattdessen kann vorgesehen sein, dass eine kostengünstige Gleitlagerhülse, welche die gewünschte Gleitlagerfläche bereitstellt, als separates Bauteil auf den Bolzen, insbesondere Planetenradbolzen, aufgesteckt und/oder in die Nabe, insbesondere eine Zentralöffnung eines Planetenrads, eingesteckt und in der gewünschten Relativlage verschweißt wird. Es wurde erkannt, dass für eine ausreichende bewegungsfeste Fixierung der Gleitlagerhülse bereits wenige Schweißpunkte und/oder Schweißnähte erforderlich sind, damit sich die Gleitlagerhülse auch unter extremen Bedingungen, wie sie in einem Windgetriebe auftreten können, aufgrund des erzeugten Stoffschlusses nicht losreißen und nicht die stoffschlüssige Verbindung aufbrechen kann, so dass eine unerwünscht mitdrehende Gleitlagerhülse auch unter extremen Bedingungen vermieden werden kann. Da bereits wenige Schweißpunkte und/oder Schweißnähte ausreichen, kann eine thermische Belastung und eine thermische Beeinträchtigung der mechanischen Eigenschaften der Gleitlagerhülse und des Bolzens und/oder der Nabe vermieden werden. Stattdessen ist es möglich in einem vergleichsweise kurzen Zeitintervall die jeweilige Schweißverbindung herzustellen, so dass ein starkes Aufheizen vermieden werden kann. Zudem kann leicht bis zur Erzeugung der nächsten räumlich versetzten Schweißverbindung so viel Zeit vergehen, dass bereits eine Abkühlung, insbesondere durch natürlich Konvektion, eingetreten sein kann und der erneute Wärmeeintrag bei der Erzeugung der nächsten Schweißverbindung ebenfalls nur zu einer geringen und unkritischen Erwärmung führt. Im Gegensatz zu einem Auftragsschweißen, bei dem das auftragsgeschweißte Material kontinuierlich zugeführt wird, ist für das Verschweißen der Gleitlagerhülse mit dem Werkstück ein kontinuierliches Schweißen für den ausreichenden stoffschlüssigen Verbund überhaupt nicht zwingend erforderlich, so dass das Verschweißen der Gleitlagerhülse mit dem Werkstück insbesondere diskontinuierlich und/oder intervallweise erfolgen kann. Durch das Verschweißen der Gleitlagerhülse mit dem Werkstück kann kostengünstig ein mechanisch hochbelastbares Gleitlager bereitgestellt werden, so dass eine kostengünstige und hochbelastbare Gleitlageranordnung, insbesondere für den Einsatz in industriellen Windkraftanlagen, ermöglicht ist.

Die Gleitlageranordnung ist insbesondere für den Einsatz in einem Windgetriebe für eine Windkraftanlage, vorzugsweise für die Lagerung eines Planetenrads an einem feststehend mit einem Planetenträger befestigten Planentenradbolzen, dimensioniert, wobei die Gleitlageranordnung grundsätzlich auch in anderen Einsatzgebieten mit ähnlich hohen Anforderungen verwendet werden kann. Wenn bezüglich der Gleitlageranordnung auf die auf den Bolzen aufgesteckte Gleitlagerhülse referenziert wird, gelten die diesbezüglichen Aussagen grundsätzlich auch analog für die kinematische Umkehr, bei die Gleitlagerhülse zusätzlich oder alternativ in der Nabe eingesteckt ist, und umgekehrt, sofern dies im konkreten Einzelfall nicht zu inhaltlichen Widersprüchen führt, die erkennbar nicht über die Analogie mit erfasst sein sollen. Insbesondere ist die Gleitlageranordnung als Radialgleitlager ausgestaltet. Vorzugsweise weist die Gleitlageranordnung zusätzlich zu einer Radialgleitlager-Funktion die Funktion mindestens eines Axialgleitlagers und/oder die Funktion einer axiale Anlauffläche, gegen die ein relativ rotierbaren Körper eine in axialer Richtung anlaufen kann, auf. Besonders bevorzugt werden die über die Gleitlageranordnung relativ drehbar aneinander gelagerten Körper in radialer Richtung ausschließlich von der Gleitlageranordnung gelagert, wobei vorzugsweise eine axiale Lagerung ebenfalls ausschließlich über die Gleitlageranordnung erfolgt.

Das Werkstück, mit dem die Gleitlagerhülse verschweißt ist, kann einen zylindrische Mantelfläche aufweisen, die je nach Ausgestaltung der Gleitlageranordnung bei einer Ausgestaltung des Werkstücks als Bolzen nach radial außen und bei einer Ausgestaltung des Werkstücks als Nabe nach radial innen weist. Zwischen der Gleitlagerhülse und der Mantelfläche des Werkstücks kann während der Montage eine Spielpassung, Übergangspassung oder Presspassung ausgebildet sein, wobei insbesondere nach der Montage ein radiales Spiel zwischen der Gleitlagerhülse und der Mantelfläche des Werkstücks eliminiert ist. Die Passung zwischen dem Werkstück und der Gleitlagerhülse kann eine axiale Relativbewegung während der Montage und einen geringen, vorzugsweise eliminierten, Spalt zwischen dem Werkstück und der Gleitlagerhülse nach der Montage ermöglichen. Eine unnötige Belastung der Schweißverbindung im laufenden Betrieb kann dadurch vermieden werden.

Das schweißbare Material des Werkstücks ist insbesondere unter Berücksichtigung des schweißbaren Materials des Haltekörper der Gleitlagerhülse ausgewählt. Hierbei kann berücksichtigt werden, dass in hochbelasteten Anwendungsbereichen, in denen extreme Bedingungen auftreten können, häufig ein hochlegierter und/oder gehärteter Stahl, insbesondere mit einem hohen Kohlenstoffgehalt von vorzugsweise über 0,22 Massenprozent zum Einsatz kommt, der grundsätzlich als nicht schweißbar oder schwer schweißbar angesehen wird. Wenn jedoch das Material des Haltekörper und des Werkstücks hinreichend ähnlich sind, kann ein geringer Kontaktwiderstand und/oder eine vergleichbare thermische Leitfähigkeit und Schmelztemperatur vorliegen, die einen stoffschlüssigen Verbund, insbesondere durch Widerstandspunktschweißen, erleichtert. Da nur wenige Schweißstellen erforderlich sind, können an diesen wenigen Schweißstellen sogar in einem begrenzten Ausmaß Aushärtungen und Versprödungen zugelassen werden, da diese nur an den Kontaktflächen zwischen der Gleitlagerhülse und dem Werkstück auftreten, nicht in das Innere des Materials hineinreichen und bei der Dimensionierung des Werkstücks und der Gleitlagerhülse leicht berücksichtigt werden können. Dies ermöglicht es als schweißbares Material für das Werkstück und/oder für den Haltekörpers der Gleitlagerhülse einen Werkstoff sogar aus der Gruppe 3 "bedingt geeignet" gemäß des DVS-Merkblatt 2902-2 für das Widerstandspunktschweißen bezüglich der Schweißeignung metallischer Werkstoffe nach EN ISO 18278-1 auszuwählen.

Die Gleitlagerfläche der Gleitlagerhülse ist die Fläche, die in direktem Kontakt mit dem relativ drehbaren Körper steht, um diesen zu lagern. Die Gleitlagerfläche kann eine zur Ausbildung eines Radialgleitlagers vorgesehene Mantelfläche des Haltekörpers zumindest zu einem Teil, vorzugsweise zu einem Großteil und besonders bevorzugt vollständig überdecken.

Die Gleitlagerfläche kann durch eine Oberfläche eines Gleitlagermaterials bereitgestellt sein. Wenn der Haltekörper selbst aus einem Gleitlagermaterial hergestellt ist, kann die Gleitlagerfläche mit der Mantelfläche des Haltekörpers zusammenfallen. Die Gleitlagerfläche kann aber auch durch ein auf den Haltekörper durch ein additives Materialauftragverfahren und/oder durch Beschichten, beispielsweise thermisches Spritzen, Auftragsschweißen, Laser-Pulver-Auftragsschweißen, aufgebrachtes Gleitlagermaterial bereitgestellt sein. Die Gleitlagerfläche der Gleitlagerhülse kann im Neuzustand mit einer Einlaufschicht versehen sein, die insbesondere im regulären Betrieb abgetragen wird, um die aus einem Gleitlagermaterial bereitgestellte Gleitlagerfläche zum Vorschein zu bringen. Die Einlaufschicht kann beispielsweise eine Reinmetallschicht sein, z.B. Zinn. Bevorzugt ist die Einlaufschicht allerdings eine polymerbasierte Einlaufschicht. Als Polymer wird insbesondere ein Polyimid oder eine Polyamidimid eingesetzt. Weiter kann die Einlaufschicht auch einen Anteil an Festschmierstoffen enthalten, beispielsweise MoS₂ und/oder Grafit. Der Anteil an dem Polymer an der Einlaufschicht kann zwischen 40 Gew.-% und 80 Gew.-% betragen. Den Rest auf 100 Gew.-% können die Festschmierstoffe bilden.

Der Gleitlagerwerkstoff für die Gleitlagerfläche kann bevorzugt ausgewählt sein aus einer Gruppe umfassend Aluminiumbasislegierungen, Bismutbasislegierungen, Silberbasislegierungen, Kupferbasislegierungen. Es sind aber auch andere Legierungen verwendbar, beispielsweise Legierungen auf Indiumbasis. Bevorzugt werden bleifreie Legierungen eingesetzt. Bleifreie Legierungen sind dabei Legierungen, die Blei in einem maximalen Anteil enthalten, der dem Anteil an üblichen Verunreinigungen in derartigen Legierungen entspricht. Der Gleitlagerwerkstoff kann beispielsweise auch eine Zinnbasislegierung, eine AlSn-Basislegierung, eine Legierung auf AlZn-, AlSi-, AlSnSi-, CuAl-, CuSn-, CuZn-, CuSnZn-, CuZnSn-, CuBi- sowie AlBi-Basis, eine Reinmetallschicht aus Al, Ni, Co, Sn, etc., aufweisen oder daraus bestehen. Es ist zudem möglich, dass der Gleitlagerwerkstoff Hartpartikel und/oder Weichphasenpartikel aufweist. Die Hartpartikel können ausgewählt sein aus einer Gruppe umfassend Metalloxide, wie beispielsweise MgO, TiO₂, ZrO₂, Al₂O₃, Metallnitride, Metallcarbide, wie beispielsweise SiC, WC, B₄C Metallboride, Metallsilizide. Die Weichphasenpartikel können ausgewählt sein aus einer Gruppe umfassend Graphit, hexagonales BN, Metallsulfide. Die Hartpartikel weisen eine größere Härte auf als eine Matrix in dem Gleitlagerwerkstoff, in der die Hartpartikel eingebettet sind. Die Weichphasenpartikel weisen hingegen eine kleinere Härte auf als die Matrix in dem Gleitlagerwerkstoff, in der sie eingebettet sind. Der Anteil der Hartpartikel und/oder Weichphasenpartikel in dem Gleitlagerwerkstoff kann ausgewählt sein aus einem Bereich von 3 Gew.% bis 25 Gew.%, insbesondere von 5 Gew.% bis 20 Gew.%. Insbesondere kann die mittlere Partikelgröße der Weichphasenpartikel und/oder Hartphasenpartikel zwischen 1 µm bis 100 µm, vorzugsweise 5 µm bis 20 µm, betragen.

Insbesondere ist der Haltekörper mit dem Werkstück entlang mindestens einer in Umfangsrichtung geschlossen verlaufenden Befestigungsline verschweißt, wobei entlang der Befestigungsline eine durchgängige Schweißnaht oder mehrere in Umfangsrichtung hintereinander angeordnete Schweißstellen ausgebildet sind. Durch die ringförmig geschlossene durchgängige Schweißnaht kann bei einer Torsionsbelastung der Gleitlagerhülse die angreifenden Lasten in Umfangrichtung gleichmäßig an das Werkstück abgetragen werden, wodurch insbesondere bei einem Anfahren, wenn die Schmierverhältnisse zwischen der Gleitlagerhülse und dem zu lagernden Körper noch nicht optimal sind, auftretende Belastungen gut abgestützt werden können, ohne dass sich die Gleitlagerhülse losreißt und mitdreht. Anstelle der ringförmig geschlossenen durchgängigen Schweißnaht können auch mehrere hintereinander angeordnete Schweißstellen vorgesehen sein, die vorzugsweise in Umfangsrichtung gelichmäßig verteilt sind und/oder in einem gleichen Umfangswinkelabstand zueinander vorgesehen sein können. Auch die entlang der gedachten Befestigungsline angeordneten mehreren Schweißstellen, insbesondere Punktschweißstellen, können eine ausreichende Vergleichmäßigung der angreifenden Lasten in Umfangsrichtung erreichen.

Vorzugsweise ist an jeweils einem axialen Ende des Haltekörpers eine Befestigungsline vorgesehen. Der Haltekörper und damit auch die Gleitlagerfläche kann dadurch an seinen axialen Enden fixiert und ortsfest definiert sein. Eine Torsion der Gleitlagerhülse unter Last, insbesondere in einer Anfahrsituation, kann dadurch vermieden oder zumindest minimiert werden. Eine Relativbewegung der Gleitlagerhülse durch elastische und/oder plastische Deformation kann durch die Fixierung der axialen Enden des Haltekörpers durch die entlang der Befestigungsline vorgesehenen Verschweißung vermieden werden.

Besonders bevorzugt ist der Haltekörper über eine in axialer Richtung und/oder in radialer Richtung ausgerichtete Kehlnaht mit dem Werkstück verschweißt. Die Schweißnaht kann dadurch mit einer Schweißelektrode erzeugt werden, die axial oder radial ausgerichtet ist und allenfalls noch zur Vorschubrichtung angeschrägt ist. Dies ermöglicht eine gute Zugänglichkeit der zu verschweißenden Schweißpartner während des Schweißprozesses. Zudem kann leicht die Verschweißung durch eine Drehung des Werkstücks zusammen mit der Gleitlagerhülse durchgeführt werden, so dass nur wenig Raumbedarf für einen Schweißroboter erforderlich ist. Durch die Relativdrehung des Werkstücks relativ zur Schweißelektrode kann leicht eine durchgängige Schweißnaht und/oder durch eine leichte Relativbewegung der Schweißelektrode von dem Werkstück weg und wieder auf das Werkstück zu eine Mehrzahl an Schweißstellen entlang der gedachten ringförmigen Befestigungsline erzeugt werden.

Insbesondere weist das Werkstück einen, insbesondere in Umfangsrichtung geschlossen umlaufenden, axial an der Gleitlagerhülse anschlagbaren Axialanschlag auf, wobei der Haltekörper mit dem Axialanschlag verschweißt ist. Durch den Axialanschlag des Werkstücks kann die axiale Relativlage der Gleitlagerhülse definiert vorgegeben werden. Dies führt wiederum dazu, dass der Haltekörper automatisch an dem Axialanschlag anliegt. Die Kontaktstelle zwischen dem Haltekörper der Gleitlagerhülse und dem Axialanschlag des Werkstücks stellen eine besonders geeignete Kontaktline dar, entlang der die Befestigungsline für die Verschweißung der Gleitlagerhülse mit dem Werkstück vorgesehen sein kann. Gegebenenfalls ist zwischen der Gleitlagerfläche und dem Axialanschlag ein freier Axialbereich vorgesehen, in dem der Haltekörpers an seiner Mantelfläche nicht von der Gleitlagerfläche bedeckt ist und/oder in dem die Gleitlagerhülse einen geringeren Außendurchmesser als der sich an dem freien Axialbereich anschließende Axialbereich der übrigen Gleitlagerhülse aufweist. Dadurch ist genügend freier Raum für eine Schweißelektrode und für das Erzeugung der Verschweißung freigehalten.

Vorzugsweise weist der Haltekörper in einer entlang einer Radialebene verlaufenden Schnittansicht einen L-förmigen Querschnitt mit einem in axialer Richtung verlaufenden, insbesondere langen, ersten Schenkel und einem in radialer Richtung verlaufende, insbesondere kurzen, zweiten Schenkel auf, wobei insbesondere der zweite Schenkel an dem Axialanschlag anliegt und sich vorzugsweise bis zu einem radialen Ende des Axialanschlags erstreckt. Der radial verlaufende zweite Schenkel kann des Haltekörpers kann ebenfalls mit der Gleitlagerfläche versehen sein und dadurch ein Axiallager ausbilden. Insbesondere wenn der zweite Schenkel flächig an dem Axialanschlag des Werkstücks anliegt, kann eine Verschweißung des Haltekörpers mit dem Axialanschlag an das radiale Ende des Axialanschlag und/oder des Haltekörpers vorgesehen sein. Wenn das radiale Ende des Axialanschlag und/oder des Haltekörpers auf einem gleichen konstanten Radius vorgesehen sind, kann leicht eine Schweißelektrode in radialer Richtung angesetzt und in Umfangsrichtung relativ bewegt werden, um kostengünstig und einfach die Verschweißung zu erzeugen.

Besonders bevorzugt weist die Gleitlagerhülse in tangentialer Richtung aufeinander zu weisende Seitenflächen auf, wobei die Seitenflächen unverbunden sind und/oder über eine Fuge voneinander getrennt sind. Die Gleitlagerhülse, insbesondere der Haltekörper, kann aus einem ungeformten Blech hergestellt sein, das in eine zylindrische Form gebogen wurde. Anstatt die aufeinander zu weisenden Seitenflächen entlang der axialen Erstreckung zu verschweißen, ist eine unmittelbare Verbindung der Seitenflächen miteinander vermieden. Dies erleichtert es die Gleitlagerhülse im aufgeweiteten Zustand auf das als Bolzen ausgestalteten Werkstück oder im zusammengestauchten Zustand in das als Nabe ausgestalteten Werkstück einzustecken. Die in der Fuge offen zugänglichen Seitenflächen der Gleitlagerhülse könne eine gute Schweißlinie zum Verschweißen des Haltekörpers der Gleitlagerhülse mit dem Werkstück, insbesondere über eine Kehlnaht bereitstellen. Zudem ist es möglich die an den Seitenflächen in Längsrichtung geöffnete Gleitlagerhülse mit Hilfe eines Werkszeugs zusammenzudrücken oder aufzuweiten, um die Montage der Gleitlagerhülse vor dem Verschweißen zu erleichtern.

In einer Ausführungsform ist insbesondere vorgesehen, dass die Seitenflächen einen Schmierölkanal zur Zufuhr von Schmieröl in einen Gleitlagerspalt begrenzen. Die Fuge zwischen den Seitenflächen kann dazu genutzt werden, ein Schmiermittel, insbesondere Schmieröl, entlang der Längserstreckung der Gleitlagerhülse zu verteilen, so dass entlang der gesamten Längserstreckung der Gleitlagerhülse Schmiermittel zur Schmierung des ausgebildeten Gleitlagers zur Verfügung stehen kann. Insbesondere sind mit dem zwischen den Seitenflächen ausgebildeten Schmierölkanal in Umfangsrichtung und/oder in Längsrichtung verteilte Schmiertaschen fluidisch mit dem Schmierölkanal verbunden. Durch den zwischen den Seitenflächen ausgebildeten Schmierölkanal kann insbesondere ein in dem Werkstück, beispielsweise als Bohrung vorgesehener Schmierölkanal eingespart und/oder ersetzt werden.

Vorzugsweise sind die Seitenflächen mit dem Werkstück verschweißt, wobei insbesondere beide Seitenflächen durch nur genau eine gemeinsame Schweißnaht mit dem Werkstück verschweißt sind. Ein verbleibender Spalt in der Fuge zwischen den beiden Seitenflächen kann klein genug sein, dass mit genau einer Schweißnaht beide Seitenflächen gleichzeitig mit dem Werkstück verschweißt werden können. Hierbei ist es möglich, dass ein Zwischenraum in der Fuge zwischen den Seitenflächen im Wesentlichen vollständig mit dem Schweißmaterial einer Schweißelektrode bis zur Gleitlagerfläche ausgefüllt sein kann. Vorzugsweise verbleibt das Schweißmaterial zu der Gleitlagerfläche zurückgesetzt in dem Zwischenraum, wodurch eine Verteilung eines Schmiermittels in axialer Richtung unterstützt wird.

Besonders bevorzugt ist vorgesehen, dass das Material des Haltekörpers die Gleitlagerfläche ausbildet oder der Haltekörper an einer Mantelfläche, insbesondere mittelbar über eine Haftvermittlerschicht, mit einer die Gleitlagerfläche ausbildenden separaten Gleitschicht, insbesondere durch Beschichten, versehen ist. Die Gleitlagerhülse kann einstückig aus dem aus einem Gleitlagermaterial hergestellten Haltekörper bestehen, so dass die Herstellung der Gleitlagerhülse einfach und kostengünstig ist. Alternativ sind die Gleitlagerfläche und der Haltekörper aus unterschiedlichen Materialen hergestellt, so dass für die Gleitlagerfläche ein für die Ausbildung des Gleitlagers optimiertes Gleitlagermaterial verwendet werden kann, während für den Haltekörper ein für die Schweißbarkeit mit dem Werkstück und/oder der zu ertragenen Belastungen optimiertes Material verwendet werden kann. Falls eine unmittelbare Befestigung des Gleitlagermaterials mit dem Haltekörper schwierig sein sollte, kann eine Zwischenschicht als Haftvermittler die Haftvermittlerschicht ausbilden, die sowohl mit dem Haltekörper als auch mit dem die Gleitlagerfläche ausbildende Gleitschicht, insbesondere stoffschlüssig, gut verbunden sein kann.

Ein Aspekt betrifft ferner eine Planetenradlagerung zur Lagerung eines Planetenrads an einem Planetenradbolzen, mit einer Gleitlageranordnung, die wie vorstehend beschrieben aus- und weitergebildet sein kann, wobei der Planetenradbolzen den Bolzen des Werkstücks ausbildet oder eine Zentralöffnung des Planetenrads die Nabe des Werkstücks ausbildet und das Planetenrad über die Gleitlagerfläche relativ zu dem Planetenradbolzen gleitgelagert ist. Die Planetenradlagerung kann insbesondere wie vorstehend anhand der Gleitlageranordnung erläutert aus- und weitergebildet sein. Durch das Verschweißen der Gleitlagerhülse mit dem Planetenradbolzen und/oder mit dem Planetenrad kann kostengünstig ein mechanisch hochbelastbares Gleitlager bereitgestellt werden, so dass eine kostengünstige und hochbelastbare Planetenradlagerung, insbesondere für den Einsatz in industriellen Windkraftanlagen, ermöglicht ist.

Insbesondere weist der Planetenradbolzen an mindestens einem seiner axialen Enden einen Befestigungsstummel zur drehfesten Befestigung mit einer Wange eines Planetenträgers auf, wobei ein Außendurchmesser des Befestigungsstummels kleiner als ein Innendurchmesser der Gleitlagerhülse ist. An dem an nur einem axialen Ende oder an beiden axialen Enden des Planetenradbolzens kann die Wange des Planetenträgers befestigt werden, um einen einwangigen oder zweiwangigen Planetenträger auszubilden. Der Befestigungsstummel kann hierbei insbesondere in eine zugehörige Öffnung der Wange eingepresst, verschweißt, verschraubt und/oder auf andere Weise bewegungsfest befestigt sein. Die Gleitlagerhülse kann bei der Montage leicht über den Befestigungsstummel auf den Planetenradbolzen aufgesteckt werden.

Ein Aspekt betrifft ferner eine Verwendung einer Planetenradlagerung, die wie vorstehend beschrieben aus- und weitergebildet sein kann, in einem mindestens eine Planetenradstufe aufweisenden Windgetriebe für eine Windkraftanlage zur industriellen Erzeugung elektrischer Energie aus Windkraft. Durch das Verschweißen der Gleitlagerhülse mit dem Planetenradbolzen und/oder mit dem Planetenrad kann kostengünstig ein mechanisch hochbelastbares Gleitlager bereitgestellt werden, so dass eine kostengünstige und hochbelastbare Planetenradlagerung für den Einsatz in industriellen Windkraftanlagen, ermöglicht ist.

Die, insbesondere industrielle, Windkraftanlagen ist vornehmlich zur Energieerzeugung aus Windkraft ausgestaltet, wobei aus der Windkraft gewonnene elektrische Energie insbesondere in ein öffentliches Stromnetz eingeleitet werden kann, um Energieverbraucher mit regenerativ erzeugter Energie versorgen zu können. Ein für eine industrielle Windkraftanlage ausgestaltetes Windgetriebe ist insbesondere für eine Leistung über 1,0 MW, vorzugsweise über 5,0 MW weiter bevorzugt über 7,5 MW und besonders bevorzugt über 15 MW ausgelegt und entsprechend robust und großvolumig ausgestaltet. Vorzugsweise ist ein Antriebsstrang der Windkraftanlage und somit auch eine Mittellinie des Windgetriebes, die mit einer Drehachse eines Rotors eines angeschlossenen Generators zusammenfällt, zur Horizontalen leicht, beispielsweise um 5° bis 12°, angeschrägt.

Ein Aspekt betrifft ferner ein Windgetriebe für eine Windkraftanlage zur industriellen Erzeugung elektrischer Energie aus Windkraft, mit mindestens einem Planetengetriebe, wobei das Planetengetriebe eine Planetenradlagerung, die wie vorstehend beschrieben aus- und weitergebildet sein kann, aufweist. Durch das Verschweißen der Gleitlagerhülse mit dem Planetenradbolzen und/oder mit dem Planetenrad kann kostengünstig ein mechanisch hochbelastbares Gleitlager bereitgestellt werden, so dass eine kostengünstige und hochbelastbare Planetenradlagerung für den Einsatz in industriellen Windkraftanlagen, ermöglicht ist.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Gleitlageranordnung, die wie vorstehend beschrieben aus- und weitergebildet sein kann, oder der Planetenradlagerung, die wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Gleitlageranordnung oder der Planetenradlagerung, insbesondere durch 3D-Druck, und/oder bei einer Verarbeitung durch eine Datenverarbeitungseinrichtung zur Durchführung einer technischen Simulation eine Simulation der Funktionsweise der Gleitlageranordnung oder der Planetenradlagerung durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise der betrachteten Vorrichtung zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Wenn ein dem konkreten Ausführungsbeispiel ein Merkmal in Kombination mit einem anderen Merkmal dargestellt wird, dient dies nur der vereinfachten Darstellung der Erfindung anhand des Ausführungsbeispiels und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird. Es zeigen:
Fig. 1: eine schematische geschnittene Seitenansicht einer ersten Ausführungsform einer erfindungsgemäßen Gleitlageranordnung während der Montage,
Fig. 2: eine schematische geschnittene Seitenansicht der Gleitlageranordnung aus Fig. 1 nach der Montage,
Fig. 3: eine schematische geschnittene Seitenansicht einer erfindungsgemäßen zweiten Ausführungsform der Gleitlageranordnung,
Fig. 4: eine schematische geschnittene Seitenansicht einer erfindungsgemäßen zweiten Ausführungsform der Gleitlageranordnung,
Fig. 5: eine schematische Prinzipdarstellung einer Herstellungsanlage für eine Gleitlagerhülse für die erfindungsgemäße Gleitlageranordnung und
Fig. 6: eine schematische Detailansicht eines Haltekörpers der Gleitlagerhülse für die erfindungsgemäße Gleitlageranordnung.

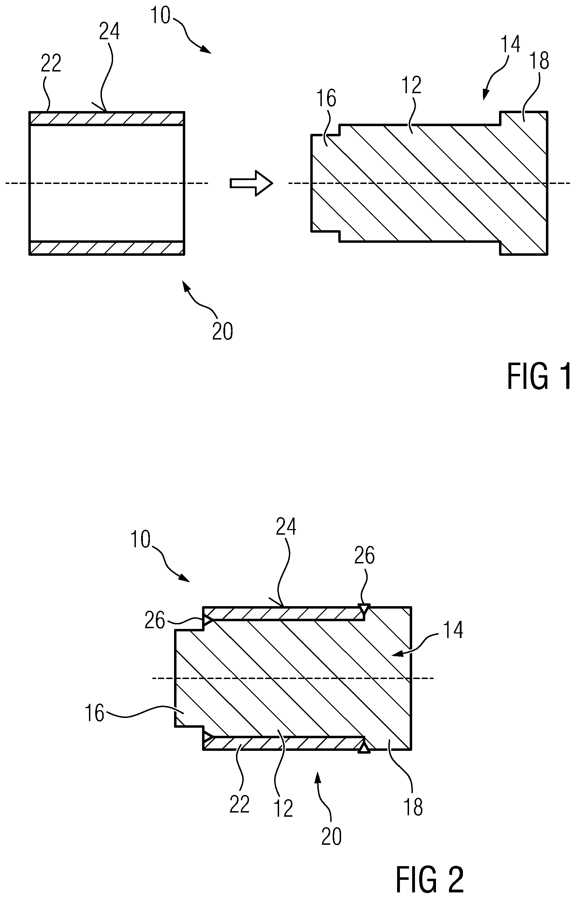

Die Fig. 1 und Fig. 2 dargestellte Gleitlageranordnung 10 kann insbesondere als Planetenradlagerung zur Lagerung eines Planetenrads in einem Windgetriebe für eine industrielle Windkraftanlage verwendet werden. Hierzu kann die Gleitlageranordnung 10 einen zylindrischen Bolzen 12 als Werkstück aufweisen, der Teil eines Planetenradbolzen 14 sein kann. Von dem zylindrischen Bolzen 12 des Planetenradbolzens 14 kann ein Befestigungsstummel 16 axial abstehen, über den der Planetenradbolzen 14 mit einem Planetenträger eines Planetengetriebes bewegungsfest verbunden werden kann. An einem von dem Befestigungsstummel 16 weg weisenden axialen Ende kann der zylindrischen Bolzen 12 einen, insbesondere als umlaufender Bord ausgebildeten, Axialanschlag 18 aufweisen. Eine Gleitlagerhülse 20 kann in axialer Richtung an dem Befestigungsstummel 16 vorbei auf den Bolzen 12 aufgeschoben werden, bis die Gleitlagerhülse 20 beziehungsweise ein Haltekörper 22 der Gleitlagerhülse 20 in einer definierten Axialrelativlage an dem Axialanschlag 18 anschlägt und vorzugsweise den Axialanschlag 18 kontaktiert. An einer von dem Bolzen 12 weg weisenden Mantelfläche der Gleitlagerhülse 20 kann eine Gleitlagerfläche 24 vorgesehen sein, die insbesondere durch ein Gleitlagermaterial bereitgestellt wird. An der Gleitlagerfläche 24 kann eine Nabe eines zu lagernden Körpers abgleiten, insbesondere eine Zentralöffnung eines Planetenrads.

Wie in Fig. 2 dargestellt ist, kann an den jeweils radial und axial gut zugänglichen Kontaktstellen zwischen dem Haltekörper 22 der Gleitlagerhülse 20 und dem Bolzen 12 jeweils eine in Umfangsrichtung geschlossen verlaufenden Befestigungsline vorliegen, entlang der ein Verschweißen des Haltekörpers 22 mit dem Bolzen 12 vorgesehen sein kann. Das Verschweißen, insbesondere Schmelzschweißen, kann hierbei mit Hilfe einer vollständig oder nur teilweise in Umfangsrichtung verlaufenden Schweißnaht 26 erfolgen, die insbesondere als Kehlnaht ausgeführt ist. Es ist aber auch möglich mehrere entlang der Befestigungsline zueinander beabstandete Schweißstellen vorzusehen, die beispielsweise als Punktschweißung ausgeführt sein können.

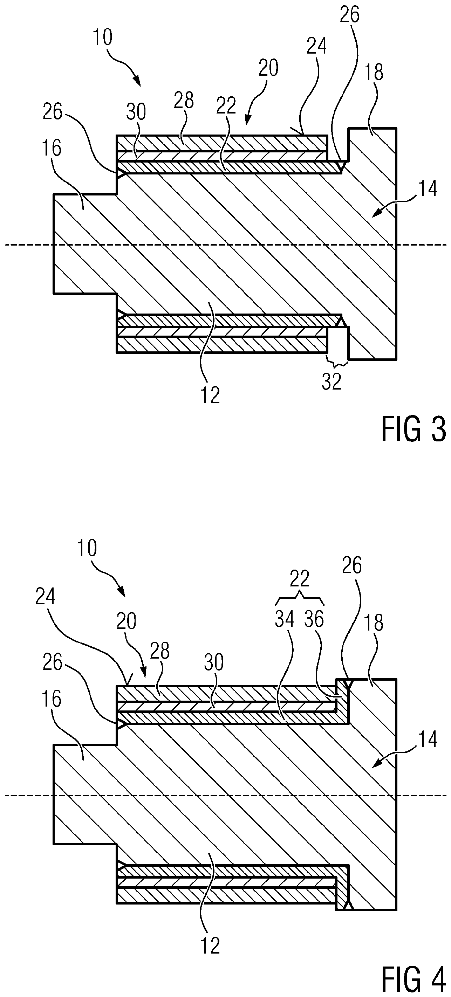

Bei der in Fig. 3 dargestellten Ausführungsform der Gleitlageranordnung 10 ist im Vergleich zu der in Fig. 2 dargestellten Ausführungsform der Gleitlageranordnung 10 die Gleitlagerfläche 24 nicht durch den Haltekörper 22, sondern durch eine separate Gleitlagerschicht 28 ausgebildet, die aus einem zum Haltekörper 22 verschiedenen Material hergestellt sein kann. Die Gleitlagerschicht 28 kann aus einem Gleitlagermaterial hergestellt sein, während das Material des Haltekörpers 22 für eine gute Schweißbarkeit mit dem Bolzen 12 ausgewählt sein kann. Erforderlichenfalls kann zwischen der einlagigen oder mehrlagigen Gleitlagerschicht 28 und dem Haltekörper 22 eine Haftvermittlerschicht 30 vorgesehen sein, die eine gute Anbindung des Materials der Gleitlagerschicht 28 an das Material des Haltekörpers 22 sicherstellt. Bei dem im Fig. 3 dargestellten Ausführungsbeispiel ist der Haltekörpers 22 zylindrisch ausgeführt und nur zu einem Teil von der Haftvermittlerschicht 30 und von der Gleitlagerschicht 28 überdeckt, so dass sich zwischen der Haftvermittlerschicht 30 und von der Gleitlagerschicht 28 einerseits und dem Axialanschlag 18 andererseits ein freier Axialbereich 32 ergibt, in den beispielsweise eine Schweißelektrode eintauchen kann, um den Haltekörper 22 mit dem Axialanschlag 18 zu verschweißen.

Bei der in Fig. 4 dargestellten Ausführungsform der Gleitlageranordnung 10 ist im Vergleich zu der in Fig. 3 dargestellten Ausführungsform der Gleitlageranordnung 10 der Haltekörper 22 im Querschnitt L-förmig ausgeführt, wobei ein langer erster Schenkel 34 axial und ein kurzer zweiter Schenkel 36 radial verläuft. Der zweite Schenkel 36 kann flächig an der Axialseite des Axialanschlags 18 anliegen und sich insbesondere im Wesentlichen bis auf den gleichen Radius wie der Axialanschlag 18 erstrecken. Dadurch kann der freie Axialbereich 32 eingespart werden, da das Verschweißen des Haltekörpers 22 mit dem Axialanschlag in einem gut zugänglichen radial äußeren Bereich erfolgt und ein Eintauchen einer Schweißelektrode in einen radial inneren Zwischenraum nicht erforderlich ist.

Die vorstehend beschriebene Gleitlageranordnung 10 wurde exemplarisch in einer Ausführungsform erläutert, in welcher die Gleitlagerhülse 20 radial außen auf den Bolzen 12 als Werkstück aufgesteckt wurde. Zusätzlich oder alternativ ist auch die kinematische Umkehr möglich, bei welcher das Werkstück nicht als Bolzen 12, sondern als Nabe, insbesondere Zentralöffnung eines Planetenrads, ausgestaltet ist und die Gleitlagerhülse 20 von radial innen in die Nabe eingesteckt ist und die Gleitlagerfläche 24 nicht nach radial außen, sondern nach radial innen weist. Die vorstehenden Ausführungen gelten für diese kinematische Umkehr analog.

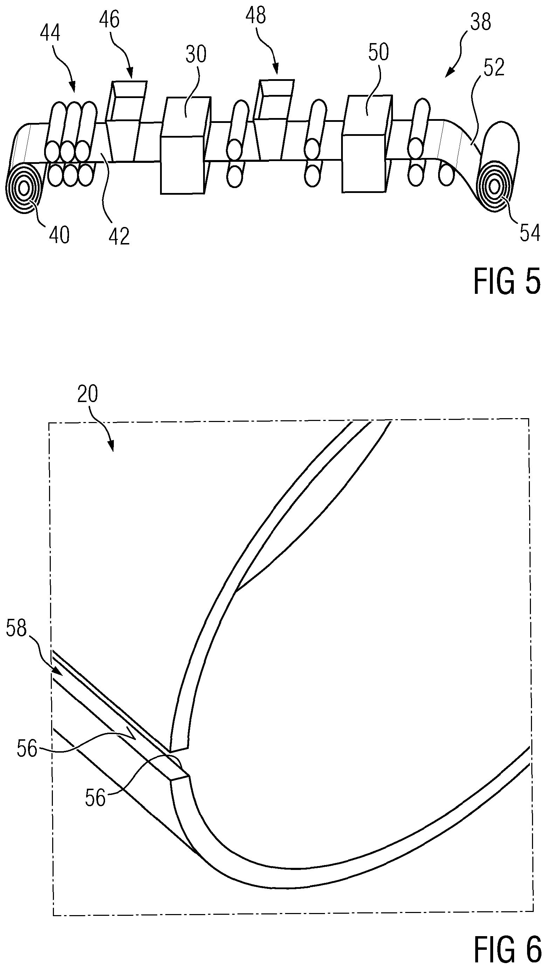

Wie in Fig. 5 illustriert ist, kann die Gleitlagerhülse 20 kostengünstig hergestellt werden, indem beispielsweise in einer Herstellungsanlage 38 die Gleitlagerhülse 20 durch eine Abfolge einzelner Herstellungsschritte zumindest teilweise hergestellt werden kann. Hierzu kann beispielsweise ein insbesondere als Coil 40 vorliegendes Blech 42, das den Haltekörper 22 der Gleitlagerhülse 20 ausbilden soll, in einer Walzanlage 44 glattgewalzt werden. In einem nächsten Herstellungsschritt kann das Blech 42 gegebenenfalls gereinigt werden. Es ist auch möglich, dass eine Haftvermittlerschicht 30 aufgebracht wird. Insbesondere wird in einer hierzu vorgesehenen Beschichtungseinrichtung 46 die Gleitlagerschicht 28 auf den Haltekörper 22 aufgebracht. Vorzugsweise kann die aufgebrachte Gleitlagerschicht 28 in einem weiteren Herstellungsschritt in einer Konditioniereinrichtung 30 je nach Herstellungsverfahren und verwendeten Material für die Gleitlagerschicht 28 aufgeheizt, beispielswiese gesintert, abgekühlt, in der Härte verändert oder in sonstiger Weise weiterbehandelt werden. Vorzugsweise kann die Gleitlagerschicht 28 in einer weiteren Beschichtungseinrichtung 48 mit einer Schutzschicht und/oder Einlaufschicht versehen werden, die beispielsweise aus PTFE hergestellt ist. Die Schutzschicht und/oder Einlaufschicht kann erforderlichenfalls in einer weiteren Konditioniereinrichtung 50 behandelt werden. Nachfolgend ist es möglich das so entstandene mehrschichtige Blech 52 als Halbzeug 54 zu einem Coil zu wickeln und an einem anderen Ort die Gleitlagerhülse 22 herzustellen.

Das mehrschichtige Blech 52 kann in der selben Herstellungsanlage 38 oder in einer anderen Herstellungsanlage in Blechstreifen vereinzelt werden, die jeweils in eine zylindrische Form gebogen werden. Hierbei ist es auch möglich Kanten durch Anfasen zu brechen, zu polieren oder sonstige Maßnahmen durchzuführen. Wie in Fig. 6 dargestellt ist, kann sich die herzustellende Gleitlagerhülse 20 bei dem Herstellungsprozess in einem Zustand befinden, in dem in tangentialer Richtung weisende Seitenflächen 56 über eine Fuge 58 getrennt aufeinander zu weisen. In der Regel kann die Fuge 58 geschlossen werden, indem die beiden Seitenflächen 56 miteinander längsgeschweißt werden. Im vorliegenden Fall kann aber bewusst das Verschweißen der Seitenflächen 56 miteinander entfallen, so dass die Gleitlagerhülse 20 mit vorhandener Fuge 58 in einem geschlitzten Zustand mit dem Werkstück, insbesondere dem Bolzen 12 oder der Nabe, montiert werden kann. Wenn die sowieso vorgesehen Verschweißungen der Gleitlagerhülse 20 mit dem Werkstück eine ausreichende Festigkeit zum Abtragen von Lasten ermöglichen, ist es grundsätzlich möglich die Fuge 58 offen zu lassen. Vorzugsweise kann die mindestens eine Seitenfläche 56 im bereits montierten Zustand der Gleitlagerhülse 20 verschweißt werden, wobei hierbei die Seitenfläche 56 mit der anderen Seitenfläche und/oder mit dem Werkstück verschweißt werden kann. Es ist sogar möglich die im verschweißten Zustand der Gleitlagerhülse 20 verbleibende Fuge 58 als einen Schmierölkanal zur Schmierung eines sich zwischen der Gleitlagerhülse und dem zu lagernden Körper ausbildenden Gleitlager zu funktionalisieren.

## Patentansprüche

1. Gleitlageranordnung (10) mit
einem aus einem schweißbaren Material hergestellten Werkstück, wobei das Werkstück zumindest in einem Teilbereich einen zylindrischen Bolzen (12) und/oder eine hohlzylindrische Nabe aufweist, und
einer auf den Bolzen (12) aufgesteckten oder in die Nabe eingesteckten Gleitlagerhülse (20),
wobei die Gleitlagerhülse (20) eine von dem Werkstück wegweisende Gleitlagerfläche (24) und einen an dem Werkstück anliegenden schweißbaren Haltekörper (22) aufweist,
wobei der Haltekörper (22) mit dem Werkstück verschweißt ist.

2. Gleitlageranordnung (10) nach Anspruch 1, wobei der Haltekörper (22) mit dem Werkstück entlang mindestens einer in Umfangsrichtung geschlossen verlaufenden Befestigungsline verschweißt ist, wobei entlang der Befestigungsline eine durchgängige Schweißnaht (26) oder mehrere in Umfangsrichtung hintereinander angeordnete Schweißstellen ausgebildet sind.

3. Gleitlageranordnung (10) nach Anspruch 2, wobei an jeweils einem axialen Ende des Haltekörpers (22) eine Befestigungsline vorgesehen ist.

4. Gleitlageranordnung (10) nach einem der Ansprüche 1 bis 3, wobei der Haltekörper (22) über eine in axialer Richtung und/oder in radialer Richtung ausgerichtete Kehlnaht mit dem Werkstück verschweißt ist.

5. Gleitlageranordnung (10) nach einem der Ansprüche 1 bis 4, wobei das Werkstück einen axial an der Gleitlagerhülse (20) anschlagbaren Axialanschlag (18) aufweist, wobei der Haltekörper (22) mit dem Axialanschlag (18) verschweißt ist.

6. Gleitlageranordnung (10) nach einem der Ansprüche 1 bis Anspruch 5, wobei der Haltekörper (22) in einer entlang einer Radialebene verlaufenden Schnittansicht einen L-förmigen Querschnitt mit einem in axialer Richtung verlaufenden ersten Schenkel (34) und einem in radialer Richtung verlaufende zweiten Schenkel (36) aufweist.

7. Gleitlageranordnung (10) nach einem der Ansprüche 1 bis 7, wobei die Gleitlagerhülse (20) in tangentialer Richtung aufeinander zu weisende Seitenflächen (56) aufweist, wobei die Seitenflächen (56) unverbunden sind und/oder über eine Fuge (58) voneinander getrennt sind.

8. Gleitlageranordnung (10) nach Anspruch 7, wobei die Seitenflächen (56) einen Schmierölkanal zur Zufuhr von Schmieröl in einen Gleitlagerspalt begrenzen.

9. Gleitlageranordnung (10) nach Anspruch 7 oder 8, wobei die Seitenflächen (56) mit dem Werkstück verschweißt sind, wobei insbesondere beide Seitenflächen (56) durch nur genau eine gemeinsame Schweißnaht mit dem Werkstück verschweißt sind.

10. Gleitlageranordnung (10) nach einem der Ansprüche 1 bis 9, wobei das Material des Haltekörpers (22) die Gleitlagerfläche (24) ausbildet oder der Haltekörper (22) an einer Mantelfläche mit einer die Gleitlagerfläche (24) ausbildenden separaten Gleitschicht (28) versehen ist.

11. Planetenradlagerung zur Lagerung eines Planetenrads an einem Planetenradbolzen (14), mit einer Gleitlageranordnung (10) nach einem der Ansprüche 1 bis 10, wobei der Planetenradbolzen (14) den Bolzen (12) des Werkstücks ausbildet oder eine Zentralöffnung des Planetenrads die Nabe des Werkstücks ausbildet und das Planetenrad über die Gleitlagerfläche (24) relativ zu dem Planetenradbolzen (14) gleitgelagert ist.

12. Planetenradlagerung nach Anspruch 11, wobei der Planetenradbolzen (14) an mindestens einem seiner axialen Enden einen Befestigungsstummel (16) zur drehfesten Befestigung mit einer Wange eines Planetenträgers aufweist, wobei ein Außendurchmesser des Befestigungsstummels (16) kleiner als ein Innendurchmesser der Gleitlagerhülse (20) ist.

13. Verwendung einer Planetenradlagerung nach Anspruch 11 oder 12 in einem mindestens eine Planetenradstufe aufweisenden Windgetriebe für eine Windkraftanlage zur industriellen Erzeugung elektrischer Energie aus Windkraft.

14. Windgetriebe für eine Windkraftanlage zur industriellen Erzeugung elektrischer Energie aus Windkraft, mit mindestens einem Planetengetriebe, wobei das Planetengetriebe eine Planetenradlagerung nach Anspruch 11 oder 12 aufweist.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Gleitlageranordnung (10) nach einem der Ansprüche 1 bis 10 oder dem Planetenradlagerung nach Anspruch 11 oder 12 vorgesehenen Bestandteile, wobei die Datenpakete dazu hergerichtet sind
bei einer Verarbeitung durch eine Datenverarbeitungseinrichtung zum Betrieb einer Werkzeugmaschine zur additiven Fertigung von Vorrichtungen eine additive Herstellung der Bestandteile der Gleitlageranordnung (10) oder der Planetenradlagerung, insbesondere durch 3D-Druck, durchzuführen und/oder
bei einer Verarbeitung durch eine Datenverarbeitungseinrichtung zur Durchführung einer technischen Simulation eine Simulation der Funktionsweise der Gleitlageranordnung (10) oder der Planetenradlagerung durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
